# EUROPÄISCHE PATENTANMELDUNG

(11) **EP 4 640 647 A1**
(43) Veröffentlichungstag der Anmeldung: **29.10.2025**
(21) Anmeldenummer: 24172351.9
(22) Anmeldetag: 25.04.2024
(51) Int. Cl.: C03C 25/12, C03C 25/47, G02B 6/02

(54) **VERFAHREN UND VORRICHTUNG ZUR HERSTELLUNG VON GLASFASERN MIT NANOPARTIKELN UND GLASFASER MIT NANOPARTIKELN**

(71) Anmelder: Gottfried Wilhelm Leibniz Universität Hannover Körperschaft des Öffentlichen Rechts, 30167 Hannover (DE)
(72) Erfinder: SPELTHANN, Dr. Simon, 30926 Seelze (DE); KÖTTERS, Lea, 30419 Hannover (DE); STEINKE, Dr. Michael, 30989 Gehrden (DE)
(74) Vertreter: Günther, Constantin

(57) **Zusammenfassung**

Die Erfindung betrifft ein Verfahren und eine Vorrichtung zur Herstellung von Glasfasern mit daran fest angebrachten Nanopartikeln. Die Erfindung betrifft außerdem eine Glasfaser aus einem Glasmaterial, bei der an wenigstens einer Oberfläche Nanopartikel fest an der Oberfläche angebracht sind.

## Beschreibung

Die Erfindung betrifft ein Verfahren und eine Vorrichtung zur Herstellung von Glasfasern mit daran fest angebrachten Nanopartikeln. Die Erfindung betrifft außerdem eine Glasfaser aus einem Glasmaterial, bei der an wenigstens einer Oberfläche Nanopartikel fest an der Oberfläche angebracht sind.

Das Verbinden von Nanopartikeln mit Glasfasern ist technisch herausfordernd, da Fremdmaterialien an oder in Quarzglasfasern typischerweise durch Dotierungsverfahren bei der Herstellung der Vorform eingebracht werden. Dotierte Quarzglasvorformen werden meist in einem MCVD-Prozess hergestellt, in welchem bei Reaktionstemperaturen von mehr als 1700°C Glas abgeschieden wird. Viele Nanomaterialien halten diesen harschen Reaktionsbedingungen nicht stand. So bestehen beispielsweise Seltenerd-dotierte Nanokristalle häufig aus einer fluoridischen Kristallmatrix, welche sich bei Temperaturen über 1000°C thermisch zersetzt. Die Temperaturbeständigkeit von Nanokristallen kann durch eine Quarzglasschale erhöht werden, allerdings reicht dieser Anstieg nicht aus, um die extremen Reaktionsbedingungen bei der Preformherstellung zu überleben.

Es gibt bereits verschiedene, etablierte Prozesse und Methoden, um Nanomaterialien an oder in Fasern an- oder einzubringen:
In-situ generierte Nanokristalle (glaskeramische Fasern)^{[1]}: In einem ersten Schritt werden Glasfasern ausgezogen, welche die für die spätere Kristallbildung benötigten Elemente als Dotanden beinhalten. Durch einen Temperprozess kann dann eine Entmischung/Phasentrennung des Glases induziert werden, d. h. durch Diffusionsprozesse bilden sich räumlich getrennte Zonen unterschiedlicher Zusammensetzung. Eine Fortführung des Temperns resultiert dann in einer lokalen Entmischung und nachfolgenden Kristallisationen, wobei die Kristallgröße durch Diffusionsprozesse meist auf ein Minimum von einigen hundert Nanometer beschränkt ist.

Dotierung mit ex-situ generierten Nanokristallen: Eine ex-situ Dotierung kann relativ einfach für niedrigschmelzende (nicht-quarzglasbasierte) Gläser realisiert werden. In diesem Fall wird das Glas so stark erwärmt, dass die Viskosität ausreichend ist, um die Nanokristalle einfach in das Glas einzurühren. Beispielsweise konnten mit diesem Ansatz Nanodiamanten (mit entsprechenden Fehlstellen) erfolgreich bei 700 °C in ein Telluritglas eingebettet und der Nutzen für Anwendungen in den Quantentechnologien demonstriert werden^{[2]}. Der entscheidende Nachteil dieses Ansatzes ist allerdings, dass niedrigschmelzende Gläser nicht mit der etablierten Aufbau- und Verbindungstechnik für Quarzglasfasern kompatibel sind. Weiterhin ist der Ansatz aufgrund der hohen Schmelztemperaturen nicht auf Quarzglas übertragbar.

Weiterhin ist bereits etabliert, Nanopartikel zur Steigerung der Homogenität der Dotierung von Glasfasern einzusetzen^{[3]}. Bei diesem Verfahren sind die Dotanden am Ende der Herstellungsprozesse stets in amorphen und nicht-kristallinen molekularen Umgebungen eingebettet, selbst wenn die Nanopartikel zu Beginn der Prozesse kristallin waren^{[4]}. Die Zersetzung der Partikel ist bei diesem Verfahren also beabsichtigt.

Befüllen von Hohlkernfasern mit Nanomaterial-Dispersionen^{[5]}: Da viele Nanomaterialien nass-chemisch synthetisiert werden, liegen sie nach der Herstellung dispergiert in einem Lösemittel vor. Unter Einsatz von mikrofluidischen Schnittstellen können diese Dispersionen in Hohlkernfasern gefüllt und optisch nutzbar gemacht werden. Mit diesem Ansatz können keine Partikel fest an oder in der Faser befestigt werden. Maßgebliche Eigenschaften der Faser, wie z.B. die Einsatztemperatur, werden durch das Lösemittel eingeschränkt.

Befestigung von Nanopartikeln mit Polymeren/Klebern: Für die Befestigung von Nanopartikeln an Fasern können Dipcoating-Techniken verwendet werden. Die Nanopartikel werden anschließend mit Kleber oder Polymeren fixiert. Nachteil dieser Methode ist, dass der Einsatzbereich und die optische Qualität solcher Proben stark durch das Polymer beschränkt ist und beispielsweise nicht in chemisch harschen Umgebungsbedingungen nutzbar ist^{[6]}.

Chemische Bindungen: Eine weitere Befestigungsmöglichkeit von Nanomaterialien an Quarzglasfasern ist die Nutzung von chemischen Bindungen. Bei diesem Verfahren wird das Glas vorbehandelt, um sog. Linker-Moleküle auf die Glasoberfläche zu bringen. Diese gehen dann eine chemische Bindung mit den Ligandenmolekülen der Nanopartikel ein. Die Robustheit der dadurch entstehenden Proben ist allerdings wiederum durch Beständigkeit der organischen Moleküle begrenzt.

Der Erfindung liegt die Aufgabe zugrunde, ein weiteres vorteilhaftes Verfahren und eine Vorrichtung zur Herstellung von Glasfasern mit daran fest angebrachten Nanopartikeln anzugeben, das einfach realisiert werden kann. Ferner soll eine auf einfache Weise herzustellende Glasfaser mit an der Oberfläche fest angebrachten Nanopartikeln angegeben werden.

Diese Aufgabe wird gemäß Anspruch 1 gelöst durch ein Verfahren zur Herstellung von Glasfasern mit daran fest angebrachten Nanopartikeln mit folgenden Schritten:
a) Bereitstellen einer Glasfaser,
b) Bereitstellen von Nanopartikeln, die jeweils mit einer Glasumhüllung ummantelt sind,
c) vorläufiges Anordnen der Nanopartikel mit ihren Glasumhüllungen an einer oder mehreren gewünschten Anordnungsstellen an der Glasfaser,
d) festes Anbringen der Nanopartikel mit ihren Glasumhüllungen an der Glasfaser durch lokal begrenztes kurzes Erhitzen des mit den Nanopartikeln versehenen Bereichs durch eine Wärmequelle auf eine Temperatur oberhalb einer Mindesttemperatur von wenigstens 1000°C, ohne dass die Nanopartikel aus ihren Glasumhüllungen austreten.

Das Verfahren kann vorteilhaft mit einem relativ einfachen technischen Aufbau realisiert werden, insbesondere ohne aufwendige PVD- oder CVD-Anlagen. Vorteilhafterweise werden dabei die Nanopartikel nicht oder nur unwesentlich geschädigt. Eine solche Schale aus Glas, die die Nanopartikel umgibt, macht die Nanopartikel robuster gegenüber thermischen Einflüssen. Insbesondere bewirken die Glasumhüllungen der Nanopartikel einen ausreichenden Hitzeschutz gegenüber der kurzzeitig auftretenden Erhitzung. Nach Durchführung des Verfahrens sind die Nanopartikel weiterhin mit Glas umhüllt.

Die Nanopartikel können insbesondere Partikel mit einer Größe eines einzelnen Partikels im Nanometerbereich sein, insbesondere mit einer Partikelgröße bis zu 100 nm oder auch über 100 nm, z.B. bis zu 200 nm, bis zu 500 nm oder bis zu 1000 nm. Wie erwähnt, soll die Mindesttemperatur wenigstens 1000°C betragen. Beispielsweise kann die Mindesttemperatur wenigstens 1200°C oder wenigstens 1500°C betragen. Die Temperatur sollte dabei unterhalb von 2200°C oder 2000°C liegen.

Eine solche Glasumhüllung der Nanopartikel hat z.B. für die Anwendung in optischen Prozessen den Vorteil, dass sie ausreichend transparent ist, um die optischen Prozesse nicht zu stören.

Ein weiterer Vorteil des Verfahrens ist, dass die verwendeten Ausgangsmaterialien, nämlich die Glasfaser und die mit einer Glasumhüllung ummantelten Nanopartikel, einfach bereitgestellt werden können, z.B. indem sie käuflich erworben werden. Eine Möglichkeit zur Herstellung von Nanopartikeln, die mit einer Glasumhüllung ummantelt sind, ist in [8] beschrieben.

Durch die Erfindung können auf einfache Weise zwei Zukunftstechnologien, nämlich die Nanotechnologie und die Glasfasertechnologie oder allgemein gesagt die Photonik zusammengebracht werden. Die damit hergestellten Glasfasern mit den daran fest angebrachten Nanopartikeln versprechen aufgrund der Kombination von Nanomaterialien mit optischer Fasertechnologie ein hohes Innovationspotential mit Anwendungen beispielsweise in der Sensorik, Lasertechnologie und Quantentechnologie.

Weitere Anwendungsmöglichkeiten liegen z.B. im Bereich Nanothermometer, Lasing, oder Beleuchtungsanwendungen. Mit der Erfindung können insbesondere neue Wellenlängenbereiche erschlossen werden, z.B. für Faserlaser, z.B. für Wellenlängen im sichtbaren Spektralbereich.

Wie erwähnt, werden mit dem erfindungsgemäßen Verfahren die Nanopartikel fest an einer Glasfaser angebracht. Die Nanopartikel können somit nicht mehr auf einfache Weise von der Glasfaser gelöst werden, insbesondere nicht durch einfaches Abwischen. Ein Lösen der Nanopartikel von der Glasfaser ist im Regelfall nicht ohne Beschädigung der Nanopartikel und/oder der Glasfaser möglich. Das feste Anbringen der Nanopartikel an der Glasfaser ist insbesondere als "fest" im Sinne von dauerhaften Fügeverbindungen zu verstehen, insbesondere im Sinne von Fügeverbindungen durch Fügeverfahren gemäß DIN 8580 Hauptgruppe 4 Teil 6.

Im Schritt c) erfolgt ein vorläufiges Anordnen der Nanopartikel mit ihren Glasumhüllungen an der Glasfaser. In diesem Zustand sind die Nanopartikel somit noch nicht fest im zuvor definierten Sinne an der Glasfaser angebracht. Beispielsweise können die Nanopartikel in diesem Zustand durch Adhäsion an der Oberfläche der Glasfaser halten. Es ist auch möglich, die Nanopartikel in einem Lösemittel gelöst bereitzustellen, z.B. in einer Dispersion oder Suspension. Das vorläufige Anordnen der Nanopartikel an der Glasfaser kann dann z.B. durch Dipcoating und/oder mittels mikrofluidischer Prozesse erfolgen, z.B. durch Eintauchen der Glasfaser in die Nanopartikel- Dispersion oder -Suspension.

Gemäß einer vorteilhaften Ausgestaltung der Erfindung ist vorgesehen, dass durch das Erhitzen im Schritt d) die Glasumhüllungen der Nanopartikel aneinander und/oder mit der Oberfläche der Glasfaser verschweißt werden. Dies erlaubt eine feste Fügeverbindung zwischen den Nanopartikeln untereinander und an der Oberfläche der Glasfaser.

Gemäß einer vorteilhaften Ausgestaltung der Erfindung ist vorgesehen, dass durch das Erhitzen im Schritt d) die Glasumhüllung der Nanokristalle angeschmolzen wird und sich mit einer Oberfläche der Glasfaser und/oder Glasumhüllungen benachbarter Nanokristalle verbindet.

Gemäß einer vorteilhaften Ausgestaltung der Erfindung ist vorgesehen, dass durch das Erhitzen im Schritt d) das Glas der Glasumhüllungen der Nanopartikel zu einer amorphen Struktur gesintert wird, während die in der Glasumhüllung angeordneten Nanokristalle weiterhin kristallin vorliegen. Die Nanokristalle verändern somit ihre Materialstruktur nicht. Beispielsweise können die mit der Glasumhüllung ummantelten Nanopartikel an ihren Glasumhüllungen aneinander gesintert werden. Dabei können die glasummantelten Nanopartikel zu Inseln koagulieren.

Das Verfahren eignet sich für prinzipiell alle Glassorten, insbesondere Quarzglas. Vorteilhaft ist es, wenn das Glas der Glasfasern und das Glas der Glasumhüllung der Nanopartikel aus dem gleichen Glasmaterial besteht. Insbesondere kann ein Glasmaterial mit einem Schmelzpunkt von deutlich mehr als 1000°C verwendet werden, z.B. einem Schmelzpunkt oberhalb von 1200°C, 1500°C oder 1600°C, z.B. bei 1700°C.

Gemäß einer vorteilhaften Ausgestaltung der Erfindung ist vorgesehen, dass die Glasfasern als Quarzglasfasern ausgebildet sind und die Glasumhüllungen der Nanopartikel aus Quarzglas ausgebildet sind. Dies erlaubt eine besonders einfache und kostengünstige Realisierung des Verfahrens, da Glasfasern und auf diese Weise mit Quarzglas umhüllte Nanopartikel leicht erhältlich sind.

Gemäß einer vorteilhaften Ausgestaltung der Erfindung ist vorgesehen, dass im Schritt c) zusätzlich Partikel aus Glas, insbesondere aus reinem Glas oder dotiert mit optisch aktiven Materialien wie z.B. Lanthanid Ionen, ohne Kern aus Nanopartikeln zugegeben werden können. Auf diese Weise kann der Dotierungsgrad der Glasfaser-Oberfläche mit den glasummantelten Nanopartikeln in gewünschter Weise beeinflusst werden, d.h. der Anteil der für eine gewünschte Funktion wirksamen Nanopartikel im Vergleich zu der Gesamtmenge der Glas-Partikel, einschließlich der reinen Glas-Partikel, kann auf einen gewünschten Wert eingestellt werden. Die Partikel aus Glas können die gleiche oder eine ähnliche Größe wie die glasummantelten Nanopartikel haben, insbesondere eine Größe im Nanometer-Bereich. Als Partikel aus Glas kann z.B. Glassand verwendet werden.

Gemäß einer vorteilhaften Ausgestaltung der Erfindung ist vorgesehen, dass das Erhitzen im Schritt d) mittels eines Faser Splicers, eines Glasprozessors, eines Lasers oder einer anderen lokal begrenzt steuerbaren Wärmequelle erfolgt. Dies ist ebenfalls vorteilhaft für eine einfache und effiziente Durchführung des Verfahrens. Solche Vorrichtungen wie Faser Splicer oder Glasprozessoren können leicht käuflich beschafft werden. Faser Splicer werden z.B. für die Verbindung von Glasfasern untereinander auf dem Markt angeboten.

Gemäß einer vorteilhaften Ausgestaltung der Erfindung ist vorgesehen, dass das Erhitzen im Schritt d) derart durchgeführt wird, dass die Glasfaser entlang einer lokal begrenzten Hitzezone der Wärmequelle mit einer vorbestimmten Geschwindigkeit entlanggeführt wird. Hierdurch kann kostengünstig und effizient eine Herstellung großer Mengen von mit Nanopartikeln beschichteten Glasfasern erzeugt werden.

Gemäß einer vorteilhaften Ausgestaltung der Erfindung ist vorgesehen, dass im Schritt c) die mit einer Glasumhüllung ummantelten Nanopartikel auf eine Stirnfläche und/oder eine Mantelfläche einer Glasfaser aufgebracht werden und/oder an die Innenwand einer Hohl-Glasfaser (Kapillarfaser) aufgebracht werden. Das Verfahren erlaubt somit die feste Anbringung von Nanopartikeln an unterschiedlichsten Stellen von Glasfasern. Im Falle einer Hohl-Glasfaser können die Nanopartikel beispielsweise durch den Kapillareffekt und/oder über eine mikrofluidische Pumpe zunächst vorläufig an der Innenwand der Glasfaser aufgebracht werden bzw. überhaupt in das Innere der Glasfaser gebracht werden.

Gemäß einer vorteilhaften Ausgestaltung der Erfindung ist vorgesehen, dass die Nanopartikel als funktionalisierte Nanopartikel ausgebildet sind, mit denen physikalische und/oder chemische Prozesse durchgeführt werden können, insbesondere optische Prozesse. Dies hat den Vorteil, dass mit der fertigen, mit Nanopartikeln beschichteten Glasfaser eine Vielzahl von Funktionen realisiert werden können, insbesondere auf den Gebieten der Sensorik, Lasertechnologie und Quantentechnologie. Beispielsweise kann eine mit solchen funktionalisierten Nanopartikeln beschichtete Glasfaser als Temperatursensor verwendet werden, z.B. in Wasserstoff-Zellen.

Beispielweise können die funktionalisierten Nanopartikel als Nanokristalle ausgebildet sein, insbesondere als Seltenerd-dotierte Nanokristalle, Halbleiterkristalle und/oder plasmonische Nanokristalle. Die funktionalisierten Nanokristalle können z.B. einen NaYF4-Kern haben, der mit Erbium und/oder Ytterbium co-dotiert ist. Das erfindungsgemäße Verfahren ist aber unabhängig vom Material der Dotierung des Kerns durchführbar, es ist somit auch für andere Partikelsysteme nutzbar.

Ein Vorteil der vorgestellten Erfindung liegt darin, dass die Nanokristalle im Glas eingebettet und als solche direkt mit der Glasfaser verbunden sind. Dadurch bleibt die Funktionalität der Nanopartikel erhalten und Zersetzungsprozesse werden minimiert. Das erlaubt erstmalig die Einbettung von komplexen Strukturen wie z. B. Kern-Schale-Partikel in Glas-Matrizen. Dem gegenüber war der Stand der Technik hier bisher auf simple Kern-Strukturen beschränkt, die nur unter hohem Aufwand und mit schlechter Größenverteilung bei schlechter Glasqualität in Glas-Matrizen integriert werden konnten. Bei diesen Verfahren werden die Nanokristalle durch thermische Nachbehandlung von Glas nachträglich im Glas geformt. Diese Prozesse sind also auf Nanokristalle im Glas beschränkt.

Perspektivisch wären hier auch Temperaturmessungen, Batterien oder biologisches Gewebe mögliche Anwendungsfälle. Aufgrund der hohen Temperaturbeständigkeit des Glases kann ein solcher Sensor auch bei hohen Prozesstemperaturen eingesetzt werden .

Denkbar wäre darüber hinaus auch eine Anwendung, bei der einzelne Nanopartikel auf Glasfaserstirnflächen aufgebracht werden, die spezielle, für die Quantenkommunikation optimierte Eigenschaften aufweisen, wie beispielsweise eine besonders gute Einphotonenemission oder hohe optische Speicherzeiten für Quantenspeicher. Durch die etablierte Verbindungstechnologie mit einer anderen Faser an diese Stirnfläche könnten so hochintegrierte Einphotonenquellen oder Quantenspeicher auf Faserbasis realisiert werden.

Weiterhin wären auch Partikel mit anderen Funktionalitäten denkbar, wie sog. sättigbare Absorber auf Basis von Kohlenstoff Nanoröhrchen als ultraschnelle Schalter (Modenkoppeln) für Faserlaser.

Durch die Herstellung von Nanopartikel-dotierten Glasfasern mit der oben beschriebenen Methode können neue laseraktive Fasern ermöglicht werden, deren Emission im sichtbaren Spektralbereich liegt. Auch direkt elektrisch betreibbare, aktive Fasern sind denkbar, wenn man den Kern mit leitenden Nanopartikeln und Halbleiter-Quantenpunkten oder 2D-Nanoplättchen dotiert. Das Einbringen von nichtlinearen 2D- Nanomaterialien in Faserkerne würde es ermöglichen, nichtlineare Effekte zweiter Ordnung zu nutzen. Diese treten in klassischen Quarzglasfasern nicht auf und würden neue Lichtquellen und faserbasierte Frequenzkonverter möglich machen.

Die oben beschriebene Befestigung von katalytisch aktiven oder plasmonischen Nanopartikeln in (Hohlkern-)Fasern kann außerdem robuste Faserreaktoren für die Durchflusschemie ermöglichen.

Die eingangs genannte Aufgabe wird außerdem durch eine Vorrichtung zur Durchführung eines Verfahrens der zuvor erläuterten Art gelöst, wobei die Vorrichtung eine Wärmequelle mit einer lokal begrenzten Hitzezone und einen Vorschubmechanismus zur Durchführung eines automatischen Vorschubs der Glasfaser entlang der Wärmequelle durch die Hitzezone hat. Der Vorschubmechanismus kann insbesondere zur Durchführung einer Vorschubbewegung der Glasfaser mit einer vorbestimmten, gleichbleibenden Vorschubgeschwindigkeit eingerichtet sein. Hierdurch wird sichergestellt, dass die Erwärmung der Nanopartikel auf eine akzeptable Zeitdauer begrenzt wird.

Die eingangs genannte Aufgabe wird außerdem durch eine Glasfaser gelöst, die durch ein Verfahren der zuvor erläuterten Art hergestellt ist, insbesondere durch eine Glasfaser aus einem Glasmaterial mit einer Schmelztemperatur von wenigstens 1000°C, bei der an wenigstens einer Oberfläche Nanopartikel, die jeweils mit einer Glasumhüllung ummantelt sind, mit ihren Glasumhüllungen fest an der Oberfläche der Glasfaser angebracht sind. Auch hierdurch können die zuvor erläuterten Vorteile realisiert werden. Die Nanopartikel können zusätzlich mit ihren Glasumhüllungen miteinander verschweißt und/oder versintert sein. Vorteilhafterweise kann die Schmelztemperatur des Glasmaterials oberhalb von 1200°C, 1500°C oder 1600°C liegen, z.B. bei 1700°C. Die Schmelztemperatur des Glasmaterials kann unterhalb von 2200°C oder 2000°C liegen.

Die Erfindung wird nachfolgend anhand von Ausführungsbeispielen unter Verwendung von Zeichnungen näher erläutert.

Es zeigen
- Figur 1: das feste Anbringen von Nanopartikeln an einer Stirnfläche einer Glasfaser,
- Figur 2: eine Hohl-Glasfaser mit an der Innenwand aufgebrachten Nanopartikeln,
- Figur 3: eine Glasfaser mit an einer Stirnfläche fest angebrachten Nanopartikeln in Insel-Struktur,
- Figur 4: ein Herstellverfahren für eine an der Außenoberfläche mit Nanopartikeln beschichtete Glasfaser.

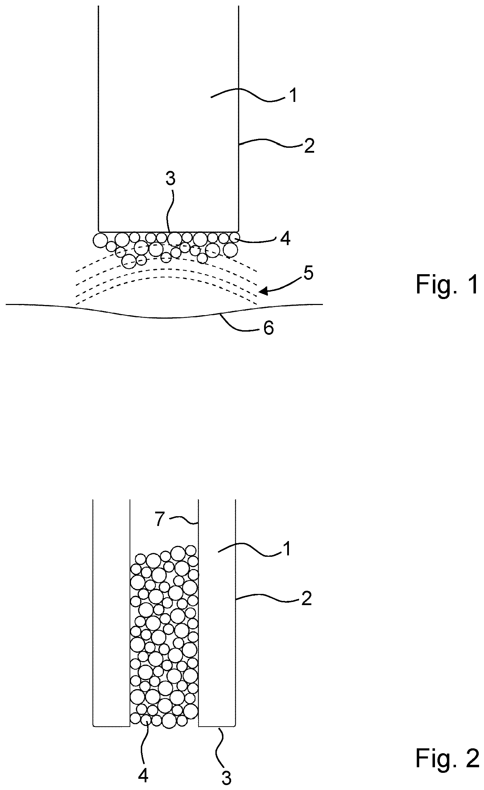

Die Figur 1 zeigt in Seitenansicht eine Glasfaser 1, die als Außenoberflächen eine Umfangsfläche 2 und eine Stirnfläche 3 hat. Die Glasfaser 1 ist nur ausschnittsweise im Bereich der Stirnfläche 3 dargestellt. An der Stirnfläche 3 sind Nanopartikel 4, die jeweils mit einer Glasumhüllung ummantelt sind, vorläufig angeordnet, z.B. durch Dipcoating. Diese Anordnung wird durch eine Wärmequelle 6 lokal begrenzt kurz durch Wärmeabgabe 5 erhitzt, insbesondere auf eine Temperatur über 1000°C, wobei die Erhitzung derart begrenzt wird, dass die Nanopartikel 4 nicht aus ihren Glasumhüllungen austreten. Hierdurch werden die Nanopartikel 4 mit ihren Glasumhüllungen miteinander versintert und zusätzlich an der Stirnfläche 3 fest angebracht.

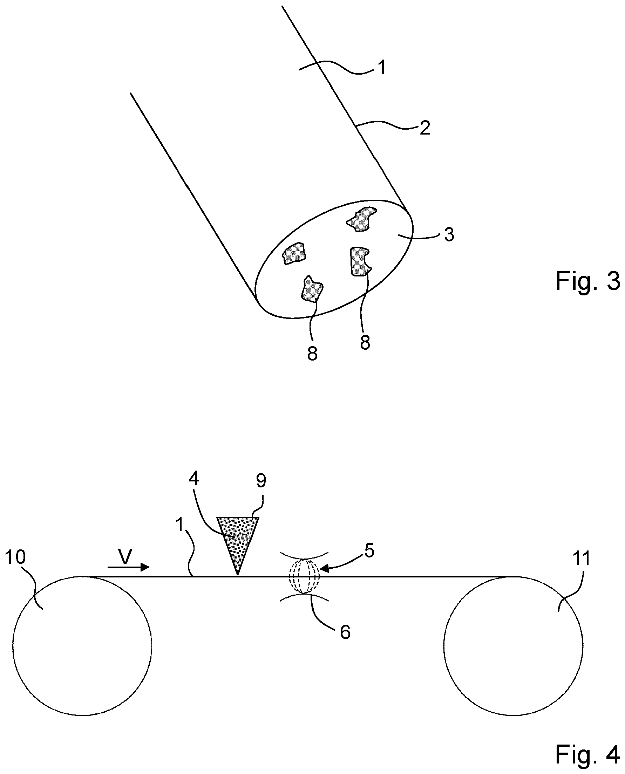

Die Figur 2 zeigt eine Ausführungsform einer Glasfaser 1, die als Hohl-Glasfaser ausgebildet ist. Im Unterschied zu der Glasfaser 1 gemäß Figur 1 hat die Hohl-Glasfaser gemäß Figur 2 somit einen im Inneren verlaufenden Kanal, an deren Innenwand 7 Nanopartikel 4, die mit einer Glasumhüllung ummantelt sind, mit dem erfindungsgemäßen Verfahren fest angebracht werden können. Die Figur 2 zeigt die Anordnung mit zunächst vorläufig angebrachten Nanopartikeln. Die feste Anbringung kann dann durch eine Vorrichtung gemäß Figur 4 erfolgen.

Die Figur 3 zeigt in perspektivischer Ansicht eine Glasfaser 1, die wiederum eine Mantelfläche 2 und eine Stirnfläche 3 hat. An der Stirnfläche 3 sind mittels des erfindungsgemäßen Verfahrens fest angebrachte Nanopartikel 4 mit ihren Glasumhüllungen fest angebracht. Man erkennt, dass die Nanopartikel 4 zu Inseln 8 koaguliert sind.

Die Figur 4 zeigt eine Vorrichtung zur Durchführung des erfindungsgemäßen Verfahrens. Von einer Vorratsrolle 10, auf der eine Glasfaser 1 aufgewickelt ist, wird die Glasfaser 1 in einer Vorschubrichtung V mittels eines Vorschubmechanismus vorwärts bewegt und auf einer Rolle 11 aufgerollt. Dabei wird die Glasfaser 1 an einer Wärmequelle 6 vorbeigeführt und dementsprechend durch die von der Wärmequelle 6 abgegebene Hitzezone 5 lokal begrenzt kurz erhitzt. Dabei ist es vorteilhaft, die Vorschubgeschwindigkeit V so einzustellen, dass die Dauer der Erhitzung ausreichend kurz ist. Der Vorschubmechanismus kann z.B. als Zugvorrichtung ausgebildet sein.

Wird eine Glasfaser 1 gemäß Figur 2 mit darin im Hohlraum bereits angeordneten Nanopartikeln 4 verwendet, erfolgt durch die Wärmequelle 6 ein festes Anbringen der Nanopartikel 4 an der Innenwand 7. Zusätzlich verschmelzen die Nanopartikel 4 mit ihren Glasumhüllungen aneinander.

Soll eine Glasfaser 1 an ihrer Mantelfläche 2 mit Nanopartikeln 4 versehen werden, kann z.B. in Vorschubrichtung V vor der Wärmequelle 6 eine Aufbringvorrichtung 9 vorhanden sein, in der ein Vorrat an Nanopartikeln 4 mit Glasumhüllung vorhanden ist. Durch die Aufbringvorrichtung 9 können die Nanopartikel 4 auf die Mantelfläche 2 der Glasfaser 1 vorläufig aufgebracht werden. Das feste Anbringen der Nanopartikel 4 an der Mantelfläche 2 erfolgt dann kurz danach durch die Wärmequelle 6. Alternativ kann die Vorrichtung auch ohne die Aufbringvorrichtung 9realisiert sein. In diesem Fall muss die Glasfaser 1 auf andere Art bereits mit den vorläufig angebrachten Nanopartikeln 4 bestückt sein.

Für das feste Anbringen von Nanomaterialien an oder in einer Glasfaser 1 ist somit ein Aufbau vorteilhaft, bei dem die Glasfaser 1 der Länge nach durch die Hitzezone 5 geführt wird. Dabei muss die Geschwindigkeit so eingestellt sein, dass die Nanopartikel 4 nicht zerstört werden, aber trotzdem zu optischer Qualität sintern. Durch Anpassen der Zuggeschwindigkeit kann die Glasfaser 1 geringfügig verjüngt werden, um Luftblasen auszuschließen. Auch ist es denkbar, statt einer Kapillarfaser eine Stufenindexfaser mit einem hohlen Nanokanal zu verwenden, der dann durch den Prozess dotiert wird. Bei diesem Verfahren ist ein CO₂ - Laser als Wärmequelle 6 vorteilhaft, weil das Maximum der HitzeZone durch geeignete Fokussierung der Laserstrahlung auf den Kern der Glasfaser 1 geleitet werden kann, während bei dem Filament keine Einstellmöglichkeit gegeben ist. Der Dotierungsgrad kann durch Zugabe von reinen Glasnanopartikeln (Glassand) eingestellt werden.

Durch das lokale Erhitzen schmilzt nun die Glasschale der Nanokristalle an und verbindet sich mit dem Glas, ggf. verbinden sich auch die Nanokristalle untereinander. Als Resultat liegen die Nanopartikel anschließend eingebettet im Glas. Es handelt sich folglich um eine Mischphase, in der das Glas zu einer amorphen Struktur gesintert wird und gleichzeitig die Nanokristalle weiterhin kristallin vorliegen. Die Temperatur muss gerade solange eingetragen werden, dass die Glasschale anschmilzt, aber sich die Nanokristalle nicht strukturell verändern. Dies kann wiederum über die Emission der Nanokristalle spektroskopisch überwacht werden: Wenn sich die Kristallphase der Nanopartikel verändert, ändert sich das lokale elektrische Feld um die dotierten Seltenerd-lonen und damit ihre spektroskopischen Eigenschaften. Das kann mittels einfacher optischer Aufbauten überwacht werden.

Die Morphologie der Partikel kann anschließend mittels Elektronenmikroskopie untersucht werden. Somit kann sichergestellt werden, dass die Nanopartikel wirklich auf oder in der Faser eingebettet sind.
[1] B. N. Samson, P. A. Tick, N. F. Borrelli, Optics letters 2001, 26, 145.
[2] M. R. Henderson, B. C. Gibson, H. Ebendorff-Heidepriem, K. Kuan, S. Afshar V, J. O. Orwa, I. Aharonovich, S. Tomljenovic-Hanic, A. D. Greentree, S. Prawer et al., Advanced materials (Deerfield Beach, Fla.) 2011, 23, 2806.
[3] J. J. Koponen, Opt. Eng 2011, 50, 111605.
[4] C. C. Baker, E. J. Friebele, A. A. Burdett, D. L. Rhonehouse, J. Fontana, W. Kim, S. R. Bowman, L. B. Shaw, J. Sanghera, J. Zhang et al., Optics express 2017, 25, 13903.
[5] M. Chemnitz, M. Schmidt, DE102018115194 (A1) 2018.
[6] L. Kötters, S. Spelthann, L. Bühre, R. Komban, H. Weller, R. Hanke-Rauschenbach, D. Ristau, C. Gimmler, B. Bensmann, M. Steinke, EPJ Web Conf. 2022, 267, 2026.
[7] Y. Xiong, F. Xu, AP 2020, 2, 64001.
[8] R. G. Geitenbeek, P. T. Prins, W. Albrecht, A. van Blaaderen, B. M. Weckhuysen, A. Meijerink, The journal of physical chemistry. C, Nanomaterials and interfaces 2017, 121, 3503.

## Patentansprüche

1. Verfahren zur Herstellung von Glasfasern (1) mit daran fest angebrachten Nanopartikeln (4) mit folgenden Schritten:
a) Bereitstellen einer Glasfaser (1),
b) Bereitstellen von Nanopartikeln (4), die jeweils mit einer Glasumhüllung ummantelt sind,
c) vorläufiges Anordnen der Nanopartikel (4) mit ihren Glasumhüllungen an einer oder mehreren gewünschten Anordnungsstellen an der Glasfaser (1),
d) festes Anbringen der Nanopartikel (4) mit ihren Glasumhüllungen an der Glasfaser (1) durch lokal begrenztes kurzes Erhitzen des mit den Nanopartikeln (4) versehenen Bereichs durch eine Wärmequelle (6) auf eine Temperatur oberhalb einer Mindesttemperatur von wenigstens 1000°C, ohne dass die Nanopartikel (4) aus ihren Glasumhüllungen austreten.

2. Verfahren nach Anspruch 1, **dadurch gekennzeichnet, dass** durch das Erhitzen im Schritt d) die Glasumhüllungen der Nanopartikel (4) aneinander und/oder mit der Oberfläche (2, 3, 7) der Glasfaser (1) verschweißt werden.

3. Verfahren nach einem der vorhergehenden Ansprüche, **dadurch gekennzeichnet, dass** durch das Erhitzen im Schritt d) die Glasumhüllung der Nanokristalle (4) angeschmolzen wird und sich mit einer Oberfläche (2, 3, 7) der Glasfaser (1) und/oder Glasumhüllungen benachbarter Nanokristalle (4) verbindet.

4. Verfahren nach einem der vorhergehenden Ansprüche, **dadurch gekennzeichnet, dass** durch das Erhitzen im Schritt d) das Glas der Glasumhüllungen der Nanopartikel (4) zu einer amorphen Struktur gesintert wird, während die in der Glasumhüllung angeordneten Nanokristalle (4) weiterhin kristallin vorliegen.

5. Verfahren nach einem der vorhergehenden Ansprüche, **dadurch gekennzeichnet, dass** die Glasfasern (1) als Quarzglasfasern ausgebildet sind und die Glasumhüllungen der Nanopartikel (4) aus Quarzglas ausgebildet sind.

6. Verfahren nach einem der vorhergehenden Ansprüche, **dadurch gekennzeichnet, dass** im Schritt c) zusätzlich Partikel aus Glas, insbesondere aus reinem Glas oder dotiert mit optisch aktiven Materialien, ohne Kern aus Nanopartikeln zugegeben werden.

7. Verfahren nach einem der vorhergehenden Ansprüche, **dadurch gekennzeichnet, dass** das Erhitzen im Schritt d) mittels eines Faser Splicers, eines Glasprozessors, eines Lasers oder einer anderen lokal begrenzt steuerbaren Wärmequelle (6) erfolgt.

8. Verfahren nach einem der vorhergehenden Ansprüche, **dadurch gekennzeichnet, dass** das Erhitzen im Schritt d) derart durchgeführt wird, dass die Glasfaser (1) entlang einer lokal begrenzten Hitzezone (5) der Wärmequelle (6) mit einer vorbestimmten Geschwindigkeit entlanggeführt wird.

9. Verfahren nach einem der vorhergehenden Ansprüche, **dadurch gekennzeichnet, dass** im Schritt c) die mit einer Glasumhüllung ummantelten Nanopartikel (4) auf eine Stirnfläche (3) und/oder eine Mantelfläche (2) einer Glasfaser (1) aufgebracht werden und/oder an die Innenwand (7) einer Hohl-Glasfaser (Kapillarfaser) aufgebracht werden.

10. Verfahren nach einem der vorhergehenden Ansprüche, **dadurch gekennzeichnet, dass** die Nanopartikel (4) als funktionalisierte Nanopartikel ausgebildet sind, mit denen physikalische und/oder chemische Prozesse durchgeführt werden können.

11. Verfahren nach Anspruch 10, **dadurch gekennzeichnet, dass** die funktionalisierten Nanopartikel als Nanokristalle ausgebildet sind, insbesondere als Seltenerd-dotierte Nanokristalle, Halbleiterkristalle und/oder plasmonische Nanokristalle.

12. Vorrichtung zur Durchführung eines Verfahrens nach einem der vorhergehenden Ansprüche, **dadurch gekennzeichnet, dass** die Vorrichtung eine Wärmequelle (6) mit einer lokal begrenzten Hitzezone (5) und einen Vorschubmechanismus zur Durchführung eines automatischen Vorschubs der Glasfaser (1) entlang der Wärmequelle (6) durch die Hitzezone (5) hat.

13. Glasfaser (1) aus einem Glasmaterial mit einer Schmelztemperatur von wenigstens 1000°C, bei der an wenigstens einer Oberfläche (2, 3, 7) Nanopartikel (4), die jeweils mit einer Glasumhüllung ummantelt sind, mit ihren Glasumhüllungen fest an der Oberfläche (2, 3, 7) der Glasfaser (1) angebracht sind.
